(19) 

Europäisches Patentamt

European Patent Office

Office européen des brevets

(11) **EP 2 554 037 B1**

(12) **EUROPEAN PATENT SPECIFICATION**

(45) Date of publication and mention of the grant of the patent:
**22.10.2014 Bulletin 2014/43**

(51) Int Cl.:
***A01C 7/20*** (2006.01)

(21) Application number: **12176566.3**

(22) Date of filing: **16.07.2012**

(54) **A supplemental down force system, ground working implement with same and method**

System für zusätzliche Anpresskraft, Bodenbearbeitungsgerät damit und Verfahren

Système de force descendante supplémentaire, instrument de travail de terrassement associé et procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2011 US 201161513915 P**

(43) Date of publication of application:
**06.02.2013 Bulletin 2013/06**

(73) Proprietor: **DEERE & COMPANY**
**Moline, Illinois 61265-8098 (US)**

(72) Inventor: **Rylander, David J**
**Victoria, IL Illinois 61485 (US)**

(74) Representative: **Reichert, Christian**
**John Deere GmbH & Co. KG**
**Global Intellectual Property Services**
**John-Deere-Straße 70**
**68163 Mannheim (DE)**

(56) References cited:
**CA-A1- 2 549 371     US-A- 5 065 681**
**US-A1- 2010 180 808**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The field relates to a supplemental down force system for a ground working implement, comprising a frame and a plurality of row units movably mounted to the frame for movement relative to the frame, the supplemental downforce system comprising: at least one actuator acting between the frame and each row unit to apply a supplemental down force to each row unit, a control system operable to control the actuators including a load sensor on each row unit to measure the soil reaction force action on each row unit, wherein the controller is adapted to receive an input from each load sensor. The invention further relates to a ground working implement comprising said supplemental down force system and to a respective method for operation.

Ground engaging implements typically have tools, or other devices that engage and work the ground. For example, a typical row crop planter has a number of planting row units that put seed in the ground as the machine is moved over a field. Each row unit is equipped with a furrow opener that opens a furrow in the soil into which seed is deposited and then covered. A depth gauge device, typically a gauge wheel, is set at a predetermined position to control how deep the opener cuts the furrow into the soil. The row units are mounted to the machine frame for vertical movement relative to the frame so that the row units can follow the ground contours. The row units must have sufficient weight to force the opener fully into the soil to the desired depth. More weight is needed for firmer soils than for light, sandy soils. The row units may not have sufficient weight to fully penetrate the opener into the soil. To overcome this problem, row units are typically provided with a supplemental down force system that transfers weight from the machine frame to the row unit. The downforce system may be a mechanical spring connected between the frame and row unit to force the row unit down. Such systems are adjustable so that the operator can adjust the amount of added, or supplemental, down force.

For example the CA2549371 A1 discloses a ground-opening device for breaking the surface of the ground and for penetrating into the soil including a ground-penetrating element. A down drive element and a reaction force sensor are configured to sense a ground reaction force, wherein the ground-opening device includes a controller configured to adjust the downward force on the ground-penetrating element in response to the sensed ground reaction force.

More recently, mechanical springs have been replaced with pneumatic down force actuators or cylinders. The amount of supplemental down force applied to the row unit is varied by changing the air pressure in the actuators. This is accomplished by a pneumatic control circuit connected to a supply of compressed air from an air compressor. Adjustment of the down force with a pneumatic system is much easier then manually changing the setting of the mechanical springs on each row unit.

Still further improvements in down force systems provide a closed loop feed back control of the pneumatic actuators. Three to five row units are equipped with load sensors that measure the soil reaction force applied to the gauge wheels or other depth gauge device. If the opener is fully penetrating, the gauge wheel will be in contact with the soil. Typically some load greater than zero is desired on the gauge wheel to ensure that the gauge wheel stays in contact with the ground at all times. The load on the gauge wheels will vary over a range due to the dynamics conditions in which the planter is operating. Thus a nominal soil reaction force on the gauge wheels is necessary so that in the dynamic range, the soil reaction force on the gauge wheel does not go to, or below zero. The operator selects the magnitude of the desired soil reaction force on the gauge wheels and the control system increases or decreases the pressure in the pneumatic cylinders to produce this desired soil reaction force. The soil reaction forces sensed by the three to five sensors are averaged to determine the needed supplemental down force. The pneumatic actuators are then all supplied with the same air pressure to produce the desired soil reaction force on the gauge wheels. However, not all row units are operating in the same soil conditions such that a supplemental down force determined by the average load sensed by the three to five row units with load sensors may not be the correct supplemental down force for any row on the machine.

The loads sensed by the three to five sensors are averaged to determine the needed supplemental down force. The pneumatic actuators are then all supplied with the same air pressure to produce the desired soil reaction force on the gauge wheels. However, due to the geometry of the planting machine, all row units may not need to the same air pressure in the actuators to produce the needed down force.

Accordingly, one object of this invention is to overcome the above mentioned problems.

The object will be achieved by the teaching of claims 1, 5 and 6. Further advantageous embodiments are described within the accompanying claims.

Accordingly, a supplemental down force system of the above mentioned type comprises that the controller is adapted to group the plurality of row units into a least a first group of row units and a second group of row units and determining a first supplemental down force to apply to each row unit in the first group of row units and a second supplemental down force to apply to each row unit in the second group of row units, and means for operating the actuators to apply the first and second supplemental down forces to the first and second groups of row units, wherein further the controller periodically determines which of the at least first and second groups each row unit is assigned.

A supplemental down force system for a ground working implement is described for an implement having a frame and a plurality of row units movably mounted to the frame for movement relative to the frame. The supplemental downforce system includes at least one actuator acting between the frame and each row unit to apply a supplemental down force to each row unit and a control system operable to control the actuators. The control system includes a load sensor on each row unit to measure the soil reaction force action on each row unit, a controller receiving an input from each load sensor and grouping the plurality of row units into at least a first group of row units and a second group of row units and determining a first supplemental down force to apply to each row unit in the first group of row units and a second supplemental down force to apply to each row unit in the second group of row units, and means for operating the actuators to apply the first and second supplemental down forces to the first and second groups of row units.

The controller periodically regroups the row units into the at least first and second groups.

In addition to the supplemental down force system, an implement having such a system is also contemplated herein as well as a method of operating such a system.

Fig. 1 is a plan view of a ground working implement, in the form of a row crop planter;

Fig. 2 is a side elevational view of a row unit of the planter of Fig. 1;

Fig. 3 is a graph showing a sample of the soil reaction forces acting on the row units of the planter of Fig. 1;

Fig. 4 is a schematic diagram of the control system of the down force system; and

Fig. 5 is a flow chart of the logic for determining regroupings of the row units.

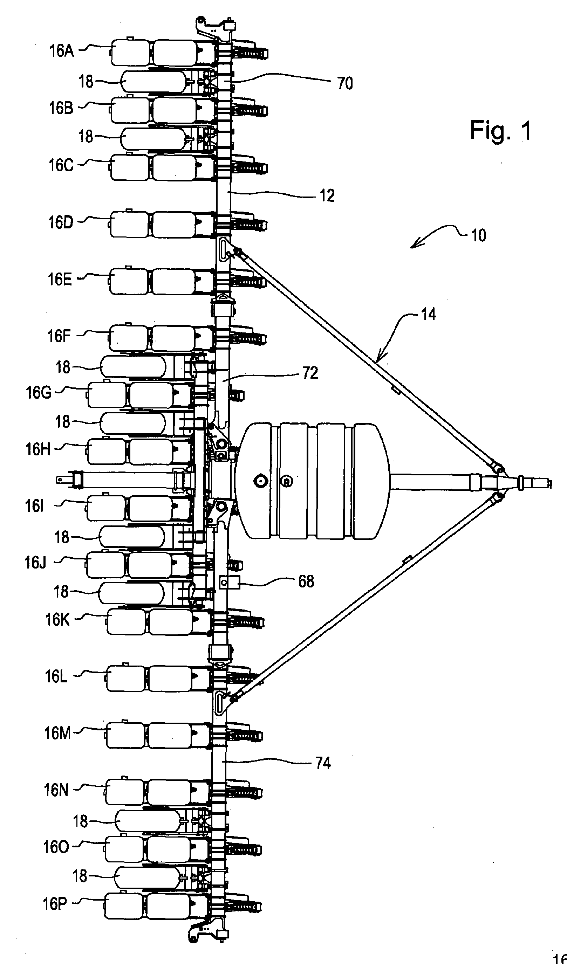

A ground working implement is shown in Fig. 1 in the form of a row crop planter 10. Planter 10 includes has a planter frame 14 which includes a tool bar 12. Mounted to the tool bar are multiple planting row units 16 (A, B, C, D, E, F, G, H, I, J, K, L, M, N, O, P) which include ground working tools as described below. Lift wheels 18 are also mounted to the frame and are used to raise and lower the tool bar for moving the row units between a lowered, ground engaging position, and a raised position disengaged from the ground for turning the planter at the end of a row. Lift mechanisms for wheels 18 are well known in the art and are not shown.

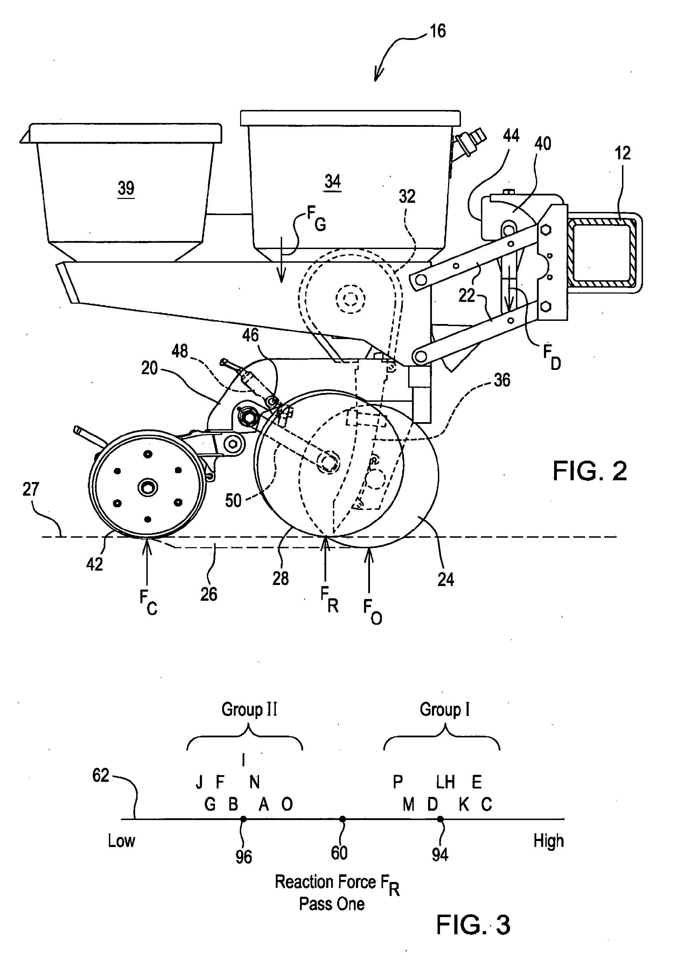

With reference to Fig. 2, a row unit 16 is shown in greater detail. Row unit 16 includes a row unit frame 20 which is attached to the tool bar 12 by parallel linkage 22. Linkage 22 permits up and down movement of the row unit relative to the tool bar 12 to follow ground contours. Row unit frame 20 carries a double disc furrow opener 24 for forming a seed furrow 26 in soil or ground 27. A pair of gauge wheels 28 is provided which function as furrow depth regulation members. Each gauge wheel is respectively associated with one disc of double disc furrow opener 24. More particularly, each gauge wheel 28 is positioned slightly behind and immediately adjacent to the outside of each respective disc of double disc furrow opener 24. (The gauge wheels can be placed in other locations relative to the opener discs.) The gauge wheels 28 are vertically adjusted relative to the opener discs to adjust the depth of the furrow 26 which is cut into the soil by the double disc furrow opener 24. Adjustment link 48, pivotally mounted to the frame at 46 locks into place and bears against the top of pivot arms 50 carrying the gauge wheels. The adjustment link 48 thus limits upward movement of the gauge wheels relative to the opener discs.

A seed meter 32 is also carried by row unit frame 20. Seed meter 32 receives seed from a seed hopper 34 carried above the seed meter on the frame 20. The seed meter drive is not shown; numerous types of drive mechanisms are well known. Seed meter 32 delivers seeds sequentially to a seed tube 36 through which the seed falls by gravity to the furrow 26. The seed meter 32 and seed tube 36 form a product dispenser to dispense product to the furrow 26. A second hopper 39 carries a particulate fertilizer or other chemical that is dispensed by another metering system and tube, not shown.

A pair of closing wheels 42 follows behind the gauge wheels and are positioned generally in line with double disc furrow opener 24. Closing wheels 42 are preferably biased in a downward direction and have a peripheral edge with a shape which may vary, depending upon the application. Closing wheels 42 push soil back into the furrow 26 upon the seed or product deposited therein. Numerous types and styles of closing wheels or devices are known.

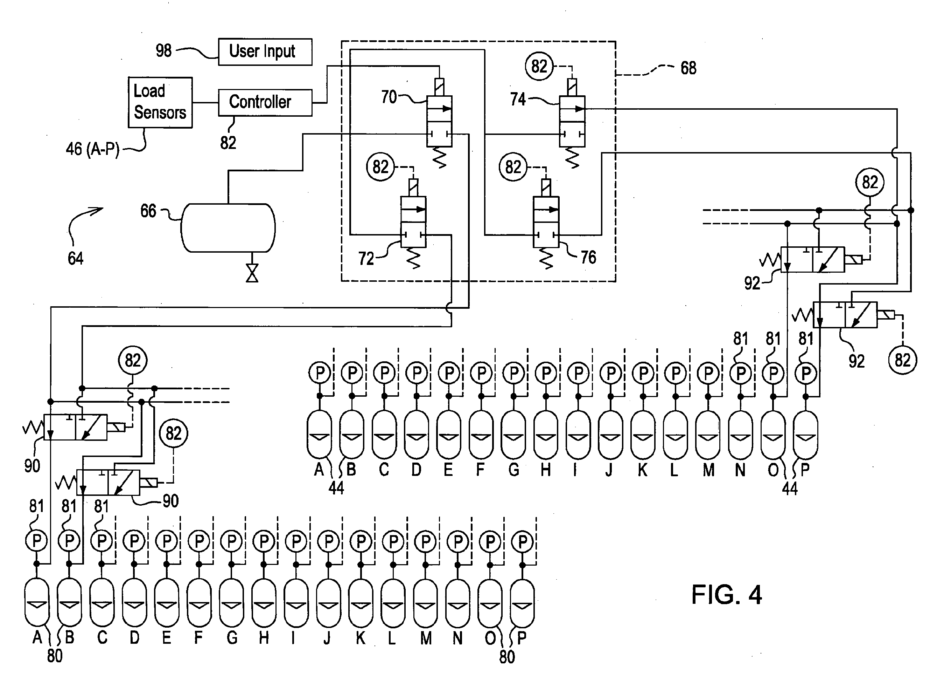

A supplemental down force system includes a row unit down force actuator 40 in the form of an adjustable pneumatic down force cylinder 44 on each row unit 16. The cylinder 44 acts between the tool bar 12 and the linkage 22 to apply supplemental down force on the row unit and the row unit components engaging the soil. The supplemental down force applied by the cylinder 44 ensures that there is sufficient force to fully insert the double disc furrow opener 24 into the soil, forming the furrow 26 to the desired depth. The supplemental down force applied to the row unit by the cylinder is shown by the arrow $F_D$. While only a down force cylinder is shown in Fig. 2, there may also be an up force, or lift cylinder 80 (Fig. 4). In other systems, there may be an adjustable mechanical spring providing a supplemental down force together with a pneumatic lift cylinder to fine tune the total down force. In such a system, the spring would be set to provide a down force that is greater than what is needed at any time and the lift cylinder would be controlled to counter-act a portion of the spring down force to produce a desire total down force.

The row unit weight also produces a down force shown by the arrow $F_G$ acting through the center of gravity of the row unit. The force $F_G$ varies over time as the level of product in the seed hopper 34 and chemical hopper 39 changes during operation of the planter 10. These two downward acting forces, $F_D$ and $F_G$ are counter-acted by upward forces acting on the row unit. The opener penetrates the soil and has a force $F_O$ acting upward on the opener. When the opener 24 is fully penetrating, the gauge wheels 28 will be in contact with the soil and a soil reaction force $F_R$ acts upward on the gauge wheels. An additional upward force on the row unit is the force $F_C$ acting on the closing wheels 42. Other attachments to the row unit, not shown, such as a coulter or row cleaner will also generate an upward force on the row unit. In systems with an up force cylinder 80, the supplemental down force $F_D$, may at times be positive and at times negative, meaning it may be directed downward or upward, but is referred to herein as a "supplemental down force" regardless of direction.

A minimum soil reaction force $F_R$ acting on the gauge wheels 28 is desired to have confidence that the opener is fully penetrating the soil to the desired depth. If the soil reaction force $F_R$ acting on the gauge wheel is zero, the gauge wheel is not touching the soil. This only occurs when the opener is not fully penetrating the soil to the desired depth. Thus, some level of soil reaction force $F_R$ greater than zero is desired to be maintained to ensure there is full penetration by the opener. The operator uses an input device 98 (Fig. 4) to input into the controller 82 a desired soil reaction force $F_R$. The magnitude of the force $F_R$ is measured by a sensor or load cell which can be placed in a variety of locations on the row unit. One example is a load sensor pin 46 in the gauge wheel depth adjustment link 48. Adjustment link 48 bears against and resists upward movement of the pivot arm 50 carrying the gauge wheels 28. A suitable load sensor pin is shown in WO2008/086283 A2. Each row unit 16 (A-P) is equipped with a load sensor pin 46(A-P) respectively. The load measured at the pin 46 is proportional to the soil reaction force $F_R$, thus allowing the controller 82 to determine the soil reaction force from the measured load.

Current production down force systems for planters, however, typically have only a few row units equipped with a load sensor pin 46. For example, the 20/20 AirForce system from Precision Planting of Tremont, Illinois, may have between three and five load sensors for a planter with as many as 48 row units. The loads sensed by the sensors are averaged to determine the needed supplemental down force. The pneumatic actuators are then all supplied with the same air pressure to produce the desired soil reaction force $F_R$ on the gauge wheels. But the several row units are not all operating in the same soil conditions and do not need the same amount of supplemental down force.

In no-tillage farming practices, common in the Mid-western region of the United States, it is advantageous to avoid planting this season's crop into last season's crop residue. This is accomplished by planting this season's crop in the row middle of the last season crop. With the recent introduction of auto steer systems for tractors, it is relatively easier to consistently plant in the row middle of last season's crop. In doing so, some rows of this season's crop will be planted where tires where driven last season and some rows will be planted in soil where there was no tire traffic last season. The soil in the rows with tire traffic from last season will be relatively firmer than the soil in rows without tire traffic. The rows in the firmer soil will have a higher force $F_O$ than the rows with the looser soil because it takes more force to fully penetrate the openers in the firmer soil. The row units typically will have the about the same quantity of product in the hoppers, so $F_G$ will be approximately the same for all row units. Thus, if all rows have the same supplemental down force $F_D$, the soil reaction force $F_R$ on the gauge wheels will be lower for the row units operating in the tire tracks with a higher opener force Fo than for the row units operating in the looser soil. If the down force system applies the same supplemental down force $F_D$ to all row units based on an average of the sensed soil reaction forces $F_R$, it is possible that none of the row units will have the desired soil reaction force $F_R$. Those row units operating in the firmer soil will not have enough down force and those row units operating in the looser soil will have too much down force.

Fig. 3 illustrates a sample of the soil reaction forces $F_R$ for the row units 16(A-P) in a typical supplemental down force system in which all row units receive the same amount of supplemental down force base on an average of the sensed soil reaction forces $F_R$ on those row units having a sensor. Each row unit is identified by the letter A-P along the horizontal axis of Fig. 3. The row units operating in softer soils, labeled as "Group I" have a higher soil reaction force $F_R$ than do the row units operating in the harder soil, labeled as "Group II." The average of the sixteen soil reaction forces $F_R$ is shown as the point 60 on the line 62. If this average soil reaction force $F_R$ is used to determine the supplemental down force $F_D$, then none of the row units will actually be adjusted to the proper amount of supplemental down force.

To overcome this problem, a supplemental down force system is provided that offers two or more magnitudes of supplemental down force. In the example system shown and described herein, two magnitudes of down force $F_D$ are made available. With the addition of more valves, three or more magnitudes of down force $F_D$ can be provided. The goal is to have all the row units with a soil reaction force $F_R$ acting on the gauge wheel as close as possible to the desired soil reaction force $F_R$. By grouping the row units into two groups, Group I and Group II, based on the measured soil reaction forces $F_R$ of each row unit, each group of row units can have a different supplemental down force $F_D$ applied to the row units of that group. With reference again to Fig. 3, the row units in Group I are given a lower supplemental down force so that the soil reaction force $F_R$ is lowered, while the row units in Group II are given a higher supplemental down force so that the soil reaction force $F_R$ will be higher and all row units will have a soil reaction force $F_R$ closer to the desired soil reaction force $F_R$. Because the soil conditions experienced by the row units change over time, the grouping or assignment of row units into Groups I and II is variable and changed periodically.

The supplemental down force system includes the control system 64 shown in Fig. 4. An air compressor 66 provides air under pressure. Each row unit 16A-P has two down force actuators, an up lift cylinder 80 and a down cylinder 44. A valve block 68 has four control valves. Control valves 70 and 72 provide air pressure to selector valves 90. There is one selector valve 90 for each row unit. The positions of the selector valves 90 determine which of the two control valves 70 or 72 the cylinders 80 are connected to. Associated with each cylinder 80 is a pressure sensor 81 which measures the pressure in the associated cylinder 80 and communicates that to the electronic controller 82. When more pressure is needed in the cylinders 80, the control valves 70 and/or 72 are repeatedly opened for brief periods of time and closed to cause the pressure in the cylinders 80 to be incrementally increased until the desired pressure is achieved. To decrease the pressure in the cylinders 80, the associated selector valve is moved to a vent position (not shown) for a series of short time periods until the desired pressure is achieved.

Likewise, control valves 74 and 76 provide two different air pressures to selector valves 92, one for each row unit. The positions of the selector valves 92 determine which of the control valves 74 or 76 are in communication with the cylinder 44 of the associated row unit. The control valves 74 and 76 are also repeatedly opened for brief periods of time and closed to cause the pressure in the cylinders 44 to be incrementally increased until the desired pressure is achieved. Compressed air tank 66 is maintained at a pressure higher than needed in the cylinders so that when any of the control valves 70, 72, 74 and 76 are open, air flows into the cylinders 44 and 80. While the control valves are repeatedly opened to increase pressure in the cylinders 44 and 80, the control valves could be opened once for a longer time period to rapidly increase the pressure in the cylinders but this will likely produce overshooting of the pressure and the need to reduce pressure.

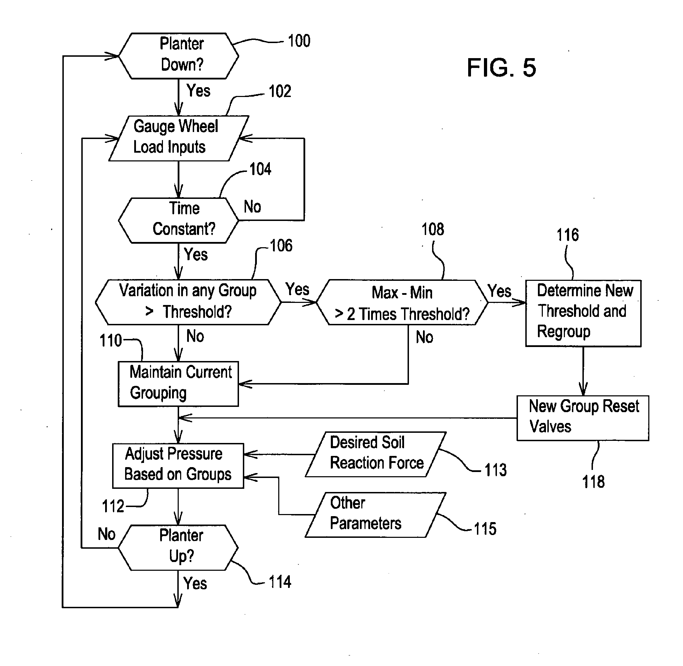

A micro-processor based controller 82 is operably connected to each of the control valves 70, 72, 74, 76 to operate each valve. Controller 82 also controls the selector valves 90 and 92 as well as receives cylinder pressure measurements from sensors 81 and load signals from sensors 46 of the soil reaction forces $F_R$. Controller 82 analyzes the load signals to determine which group each row unit should be assigned to by finding an average 94 and 96 for Groups I and II respectively. One way of grouping the row units is to find groups where the average soil reaction forces $F_R$ for the groups result in the sum of the differences between the averages and the actual measured loads for each row unit being a minimum. The averages 94 and 96 for the two groups of row units is then used to determine the pressure supplied to the cylinders through the control valves 70, 72, 74, and 76 and selector valves 90 and 92. Another method of grouping the row units is described in connection with Fig. 5.

As the planter moves through the field, the measured loads will change and the averages 94, 96 for the two groups will change. The control system 64 continuously monitors the loads and will change the air pressures in the cylinders 44 and 80 to maintain the soil reaction force $F_R$ acting on the gauge wheel close to the desired amount. This is a dynamically controlled, closed loop system. The user inputs to the controller the desired amount for the soil reaction force $F_R$ through an input device 98.

The following tables show three planter passes in a field with a sixteen row planter and how on each pass, the row units operating in tire tracks from last year change. This illustrates the need to periodically regroup the row units. Also shown are last season's planting rows, the planter tires, the tires from the tractor pulling the planter, the tires of a combine with an eight row head and the tires of a 120 foot sprayer all used in the field last season. The rows and tires move side to side across the page. There are no sprayer tire tracks in Pass One and Pass Two.

Table I: Pass One with the current season planter moving left to right.

| Current Season Planting Rows | Last Season Planter Tires and Rows | Last Season Tractor Tires and Rows | Last Season Combine Tires and Rows | Last Season Sprayer Tires and Rows |
|---|---|---|---|---|
|  | 1 |  | 1 | 1 |
| 1(A) | Pltr 1 |  | Cmb 1 |  |
|  | 2 |  | 2 | 2 |
| 2(B) | Pltr 2 |  | Cmb2 |  |
|  | 3 |  | 3 | 3 |
| 3(C) |  |  |  |  |
|  | 4 |  | 4 | 4 |
| 4(D) |  |  |  |  |
|  | 5 |  | 5 | 5 |

(continued)

| Current Season Planting Rows | Last Season Planter Tires and Rows | Last Season Tractor Tires and Rows | Last Season Combine Tires and Rows | Last Season Sprayer Tires and Rows |
|---|---|---|---|---|
| 5(E) | | | | |
| | 6 | | 6 | 6 |
| 6(F) | Pltr 3 | Trac 1 | Cmb3 | |
| | 7 | | 7 | 7 |
| 7(G) | Pltr 4 | Trac 2 | Cmb4 | |
| | 8 | | 8 | 8 |
| 8(H) | | | | |
| | 9 | | 1 | 9 |
| 9(I) | Pltr 5 | Trac 3 | Cmb 1 | |
| | 10 | | 2 | 10 |
| 10(J) | Pltr 6 | Trac 4 | Cmb2 | |
| | 11 | | 3 | 11 |
| 11(K) | | | | |
| | 12 | | 4 | 12 |
| 12(L) | | | | |
| | 13 | | 5 | 13 |
| 13(M) | | | | |
| | 14 | | 6 | 14 |
| 14(N) | Pltr 7 | | Cmb3 | |
| | 15 | | 7 | 15 |
| 15(O) | Pltr 8 | | Cmb4 | |
| | 16 | | 8 | 16 |
| 16(P) | | | | |

In pass one, row units A, B, F, G, I, J, N and O operate in tire tracks with relatively firm soil. The other row units operate in relatively loose soil. The control system 64 monitors the soil reaction forces $F_R$ on the gauge wheels. Those row units operating in tire tracks will have a lower soil reaction force $F_R$ since more of the row unit weight $F_G$ and any supplemental down force $F_D$ is used to force the opener discs into the soil. An initial determination of the soil reaction force $F_R$ can be made with all row units supplied with the same supplemental down force $F_D$ through the cylinders 44. Alternatively, the initial determination can be made without any supplemental down force $F_D$.

After completing pass one with the planter moving left to right, the current season planter makes a U-turn to the right and then moves right to left for pass two. Row unit P in pass two is next to row unit P from pass one.

Table 2: Pass Two with the current season planter moving right to left.

| Current Season Planting Rows | Last Season Planter Tires and Rows | Last Season Tractor Tires and Rows | Last Season Combine Tires and Rows | Last Season Sprayer Tires and Rows |
|---|---|---|---|---|
| | 16 | | 1 | 17 |
| 16(P) | Pltr 8 | | Cmb 1 | |
| | 15 | | 2 | 18 |

(continued)

| Current Season Planting Rows | Last Season Planter Tires and Rows | Last Season Tractor Tires and Rows | Last Season Combine Tires and Rows | Last Season Sprayer Tires and Rows |
|---|---|---|---|---|
| 15(O) | **Pltr 7** | | **Cmb2** | |
| | **14** | | **3** | **19** |
| 14(N) | | | | |
| | **13** | | **4** | **20** |
| 13(M) | | | | |
| | **12** | | **5** | **21** |
| 12(L) | | | | |
| | **11** | | **6** | **22** |
| 11(K) | **Pltr 6** | **Trac 1** | **Cmb3** | **Spryr 1** |
| | **10** | | **7** | **23** |
| 10(J) | **Pltr 5** | **Trac 2** | **Cmb4** | |
| | **9** | | **8** | **24** |
| 9(I) | | | | |
| | **8** | | **1** | **25** |
| 8(H) | **Pltr 4** | **Trac 3** | **Cmb 1** | |
| | **7** | | **2** | **26** |
| 7(G) | **Pltr 3** | **Trac 4** | **Cmb2** | **Spryr 2** |
| | **6** | | **3** | **27** |
| 6(F) | | | | |
| | **5** | | **4** | **28** |
| 5(E) | | | | |
| | **4** | | **5** | **29** |
| 4(D) | | | | |
| | **3** | | **6** | **30** |
| 3(C) | **Pltr 2** | | **Cmb3** | |
| | **2** | | **7** | **31** |
| 2(B) | **Pltr 1** | | **Cmb4** | |
| | **1** | | **8** | **32** |
| 1(A) | | | | |

When the turn is made between passes one and two, the row units of the current season planter that now operate in tire tracks from last season are shifted over one row unit. In pass two, row units B, C, G, H, J, K, O and P are operating in tire tracks. Upon each turn, the control system 64 regroups the row units into new Groups I and II. To initiate the regrouping of the row units, the control system keeps the existing air pressures on the two groups and takes this into consideration when forming the new groups. Alternatively, the control system could apply the same pressure to all row units momentarily during the regrouping process and see the relative amounts of the soil reaction force $F_R$ for use in regrouping.

Table 3 below shows the row unit and tire tracks for pass three after the planter makes another U-turn, this time to the left, and again traveling left to right. This alignment of row units with tire tracks is the same as in pass one above shown in Table I. Again, at the beginning of pass three, the control system 64 regroups the row units.

Table 3: Pass Three with the current season planter moving left to right

| Current Season Planting Rows | Last Season Planter Tires and Rows | Last Season Tractor Tires and Rows | Last Season Combine Tires and Rows | Last Season Sprayer Tires and Rows |
|---|---|---|---|---|
|  | 1 |  | 1 | 33 |
| 1(A) | Pltr 1 |  | Cmb 1 |  |
|  | 2 |  | 2 | 34 |
| 2(B) | Pltr 2 |  | Cmb 2 |  |
|  | 3 |  | 3 | 35 |
| 3(C) |  |  |  |  |
|  | 4 |  | 4 | 36 |
| 4(D) |  |  |  |  |
|  | 5 |  | 5 | 37 |
| 5(E) |  |  |  |  |
|  | 6 |  | 6 | 38 |
| 6(F) | Pltr 3 | Trac 1 | Cmb3 |  |
|  | 7 |  | 7 | 39 |
| 7(G) | Pltr 4 | Trac 2 | Cmb4 |  |
|  | 8 |  | 8 | 40 |
| 8(H) |  |  |  |  |
|  | 9 |  | 1 | 41 |
| 9(I) | Pltr 5 | Trac 3 | Cmb 1 |  |
|  | 10 |  | 2 | 42 |
| 10(J) | Pltr 6 | Trac 4 | Cmb2 |  |
|  | 11 |  | 3 | 43 |
| 11 (K) |  |  |  |  |
|  | 12 |  | 4 | 44 |
| 12(L) |  |  |  |  |
|  | 13 |  | 5 | 45 |
| 13(M) |  |  |  |  |
|  | 14 |  | 6 | 46 |
| 14(N) | Pltr 7 |  | Cmb3 |  |
|  | 15 |  | 7 | 47 |
| 15(O) | Pltr 8 |  | Cmb4 |  |
|  | 16 |  | 8 | 48 |
| 16(P) |  |  |  |  |

In the illustration above, there is a fair amount of consistency from one pass to the next in terms of which row units of the planter this season are operating in tire tracks from last season. But with some planter, tractor, combine and sprayer configurations, there is a significant difference from pass to pass in terms of which row units are operating in tire tracks and which are not. Thus, with each turn, the control system engages in a regrouping process.

Last season's tire tracks is only one reason why some row units need more supplemental down force than others. Variation in soil types across the machine and variation in soil moisture will also be factors in the determining needed supplemental down force. As machines become wider, there is a greater likelihood of soil type variations across the width of the machine. Thus it is most beneficial if the control system regroups the row units more often than every turn. With reference to Fig. 5, a flow chart is shown to illustrate the periodic row unit regrouping process. The process waits in box 100 until the planter is in the down position. If the planter is down in box 100, then the gauge wheel loads are recorded in box 102. If a time constant representing the time interval between regrouping has not been exceeded in box 104, then return to box 102. The time constant is in the order of a few minutes; for example, somewhere between one and three minutes to avoid excessive regrouping. But any time constant can be used, preferably less than the time to plant a typical row. If the time constant has been reached since the last regrouping of the row units, then move to box 106.

In the initial grouping of the row units in a two group system, a threshold value is determined as:

$$threshold = \frac{(max. - min.)}{2}$$

The row units with soil reaction forces between the minimum and the minimum plus the threshold are placed in one group while the remaining row units are placed in the other group.

In box 106, if the variation of the soil reaction forces within one group exceeds the threshold, then move to box 108. If the variation within each group does not exceed the threshold, then move to box 110 and maintain the current groupings.

In box 108, the difference between the maximum and the minimum soil reaction forces of all row units is compared to two times the threshold. If the difference is less than two times the threshold, then move to box 110 and maintain the current groupings. If the difference between the maximum and the minimum soil reaction forces of all row units is greater than two times the threshold, then move to box 116 and determine a new threshold using the equation above with the current soil reaction forces. Moving to box 118, the row units are then regrouped as described above using the new threshold. The valves are reset according to the new groupings and the pressures adjusted accordingly. When making the above determinations, the controller 82 calculates the soil reaction forces as if all row units had the same level of supplemental down force $F_D$. This way, the current groupings of row units and different levels of supplemental down force $F_D$ don't affect the regrouping. In other words, the minimum and maximum soil reaction forces must be determined with the same of supplemental down force $F_D$ on all row units. This can be a measured number with all row units receiving the same air pressure in the cylinders 44 and 80 or it can be a calculated number from the measured soil reaction force and the of supplemental down force $F_D$ on each individual row unit.

In box 112, the air pressure in the cylinders is adjusted based on inputs of the desired soil reaction force $F_R$, box 113 and other parameters, box 115, as well as the current gauge wheel load measurements from box 102. In box 114, a determination is made of whether the planter is raised or still lowered in the operating position.

If the control system provided for three groupings of row units, the threshold would be determined by:

$$threshold = \frac{max. - min.}{3}$$

The groups would then be as follows: Group I is the row units with soil reaction forces between the minimum and the minimum plus the threshold; Group II is the row units with soil reaction forces between the minimum plus the threshold and the minimum plus two times the threshold; and Group III is the remaining row units.

Control system 64 has been described in the context of providing two different pressures to each of the up lift cylinders and each of the down force cylinders. Those skilled in the art will readily see that any number of pressures can be made available to each row unit. Three groupings and three air pressures are possible with an additional control valve and appropriate selector valves. The more pressures that are available, the closer each row unit soil reaction force $F_R$ will be to the desired soil reaction force $F_R$. It is possible to provide a pressure regulating control valves for each row unit and provide a unique pressure to each row unit. However, at some point, the additional cost of valves will not be justified in terms of increased yield resulting from improved planter performance.

The control system illustrated in Fig. 4 includes both up lift cylinders 80 and down force cylinders 44. Those skilled in the art will readily see that a system with only lift cylinders or only down force cylinders can be employed by merely removing the cylinders and valves not needed. As mentioned above, the up lift cylinders may be used in combination with other adjustable down force devices such as mechanical springs. Some row unit configurations, particularly when used with min-hoppers for the seed instead of the large hopper 34 shown in Fig. 2 may need down force at all times and have no need for an up lift cylinder to achieve the desired soil reaction force $F_R$.

**EP 2 554 037 B1**

The control system 64 operates to achieve a soil reaction force $F_R$ for all row units that is as close as possible to the desired soil reaction force $F_R$. Recognizing that the opener force $F_O$ will vary from row to row, the system attempts to vary the supplemental down force $F_D$ among the row units. In the system illustrated, two different magnitudes of down force $F_D$ are made available but this can be expanded to three or more different magnitudes of down force $F_D$ as noted above.

The control system 64 includes the valves to increase or decrease the air pressure in the cylinders 44, 80. The illustrated valve arrangement is only an example. Other valve arrangements can be used to perform the described operation.

A pneumatic supplemental down force system is sown and described. Pneumatic systems are common in current production supplemental down force systems. It will be appreciated that other types of actuators and cylinders such as hydraulic cylinders and electro-mechanical actuators can be used to apply supplemental down force. The claims that follow shall not be limited to any particular type of actuator or cylinder unless specified in the claim itself.

In conclusion, the supplemental down force system includes the actuators or cylinders 44, 80 on each row unit and a control system 64 for operating the actuators or cylinders. The control system includes the controller 82, load sensors 46 on each row unit, the pressure sensors 81 and necessary valves and connectors to operate the actuators or cylinders. The valves and connectors constitute the means for operating the actuators.

Having described the down force system with variable grouping of row units, it will become apparent that various modifications can be made to the supplemental down force system without departing from the scope of the accompanying claims.

**Claims**

1. A supplemental down force system for a ground working implement (10), comprising a frame (14) and a plurality of row units (16A, ..., 16P) movably mounted to the frame (14) for movement relative to the frame (14), the supplemental down force system comprising: at least one actuator (40) acting between the frame (14) and each row unit (16A, ..., 16P) to apply a supplemental down force ($F_D$) to each row unit (16A, ..., 16P), a control system (64) operable to control the actuators (40) including a controller ( 82) and load sensor (46A, .., 46P) on each row unit (16A, ..., 16P) to measure the soil reaction force action on each row unit (16A, ..., 16P), wherein the controller (82) is adapted to receive an input from each load sensor (46A, ...46P), **characterized in that** the controller is adapted to group the plurality of row units (16A, ..., 16P) into at least a first group of row units (16A, ..., 16P) and a second group of row units (16A, ..., 16P) and determining a first supplemental down force ($F_D$) to apply to each row unit (16A, ..., 16P) in the first group of row units (16A, ..., 16P) and a second supplemental down force ($F_D$) to apply to each row unit (16A, ..., 16P) in the second group of row units (16A, ..., 16P), and means for operating the actuators (40) to apply the first and second supplemental down forces ($F_D$) to the first and second groups of row units (16A, ..., 16P), wherein further the controller (82) periodically determines which of the at least first and second groups each row unit (16A, ..., 16P) is assigned.

2. The supplemental down force system of claim 1 wherein: the actuators (40) are pneumatic; the controller (82) is operable to determine an air pressure to apply to each actuator (40); and wherein the control system (64) includes an air compressor (66) and valves (70, 72, 74, 76, 90, 92) operably connected to each actuator (40) to apply the pressure necessary to produce the desired supplemental down force ($F_D$) on each row unit (16A, ..., 16P).

3. The supplemental down force system of claim 1 or 2 wherein two actuators (40) are provided between each row unit (16A, ..., 16P) and the frame (14), an up force actuator (80) and a down force actuator (44) and the combined forces applied to the row unit (16A, ..., 16P) by the up force and down force actuators (80, 44) is the supplemental down force ($F_D$).

4. The supplemental down force system of one of the claims 1 to 3 wherein the controller (82) determines which of the at least first and second groups each row unit (16A, ..., 16P) is assigned each time the implement (10) is raised and lowered.

5. A ground working implement (10) comprising a frame (14) and a plurality of row units (16A, ..., 16P) movably mounted to the frame (14) for movement relative to the frame **characterized in** further comprising a supplemental down force system according to one of the claims 1 to 4.

6. A method of operating a supplemental down force system of a ground working implement (10), the implement having a frame (14), a plurality of row units (16A, ..., 16P) movably mounted to the frame (14) and the supplemental down force system having at least one actuator (40) acting between the frame (14) and each row unit (16A, ..., 16P) to apply a supplemental down force to each row unit (16A, ..., 16P) and a load sensor (46A, ..., 46P) on each row unit (16A, ..., 16P) to measure a soil reaction force acting on each row unit (16A, ..., 16P), the method is **characterized in** comprising the steps of: determining the soil reaction force acting on each row unit (16A, ..., 16P); comparing the soil reaction force acting on each row unit (16A, ..., 16P) to a desired soil reaction force acting on each row unit (16A, ..., 16P); grouping the row units (16A, ..., 16P) into at least first and second groups of row units (16A, ..., 16P); determining a first supplemental down force ($F_D$) to apply to the first group of row units (16A, ..., 16P) to bring the soil reaction force ($F_R$) acting on the row units (16A, ..., 16P) of the first group closer to the desired soil reaction force ($F_R$) and determining a second supplemental down force ($F_D$) to apply to the second group of row units (16A, ..., 16P) to bring the soil reaction force ($F_R$) acting on the row units (16A, ..., 16P) of the second group closer to the desired soil reaction force ($F_R$); and applying the first supplemental down force ($F_D$) to the row units (16A, ..., 16P) of the first group of row units (16A, ..., 16P) and applying the second supplemental down force ($F_D$) to the row units (16A, ..., 16P) of the second group.

7. The method of claim 6 further comprising the steps of periodically performing the steps again during operation of the implement (10).

8. The method of claim 6, wherein the steps of the method are repeated each time the implement (10) is raised and lowered.

**Patentansprüche**

1. Zusätzliches Abwärtskraftsystem für ein Bodenbearbeitungswerkzeug (10), das einen Rahmen (14) und mehrere Reiheneinheiten (16A, ..., 16P), die für eine Bewegung in Bezug auf den Rahmen (14) beweglich an dem Rahmen (14) befestigt sind, umfasst, wobei das zusätzliche Abwärtskraftsystem Folgendes umfasst: mindestens einen Aktor (40), der zwischen dem Rahmen (14) und jeder Reiheneinheit (16A, ..., 16P) wirkt, um eine zusätzliche Abwärtskraft ($F_D$) auf jede Reiheneinheit (16A, ..., 16P) anzuwenden, ein Steuersystem (64), das betreibbar ist, die Aktoren (40) einschließlich einer Steuereinheit (82) zu steuern, und einen Lastsensor (46A, ..., 46P) auf jeder Reiheneinheit (16A, ..., 16P), um den Bodengegenkraftvorgang auf jede Reiheneinheit (16A, ..., 16P) zu messen, wobei die Steuereinheit (82) dafür ausgelegt ist, eine Eingabe von jedem Lastsensor (46A, ..., 46P) zu empfangen, **dadurch gekennzeichnet, dass** die Steuereinheit dafür ausgelegt ist, die mehreren Reiheneinheiten (16A, ..., 16P) in mindestens eine erste Gruppe der Reiheneinheiten (16A, ..., 16P) und eine zweite Gruppe der Reiheneinheiten (16A, ..., 16P) einzuteilen und eine erste zusätzliche Abwärtskraft ($F_D$), die auf jede Reiheneinheit (16A, ..., 16P) in der ersten Gruppe der Reiheneinheiten (16A, ..., 16P) angewendet wird, und eine zweite zusätzliche Abwärtskraft ($F_D$), die auf jede Reiheneinheit (16A, ..., 16P) in der zweiten Gruppe der Reiheneinheiten (16A, ..., 16P) angewendet wird, zu bestimmen, und Mittel zum Betreiben der Aktoren (40), um die erste und die zweite zusätzliche Abwärtskraft ($F_D$) auf die erste und die zweite Gruppe der Reiheneinheiten (16A, ..., 16P) anzuwenden, wobei die Steuereinheit (82) ferner regelmäßig bestimmt, welcher der mindestens ersten und zweiten Gruppe jede Reiheneinheit (16A, ..., 16P) zugeordnet ist.

2. Zusätzliches Abwärtskraftsystem nach Anspruch 1, wobei: die Aktoren (40) pneumatisch sind; die Steuereinheit (82) betreibbar ist, einen Luftdruck, der an jeden Aktor (40) angelegt ist, zu bestimmen, und wobei das Steuersystem (64) einen Luftkompressor (66) und Ventile (70, 72, 74, 76, 90, 92), die mit jedem Aktor (40) betriebstechnisch verbunden sind, umfasst, um den notwendigen Druck anzuwenden, um die gewünschte zusätzliche Abwärtskraft ($F_D$) auf jede Reiheneinheit (16A, ..., 16P) zu erzeugen.

3. Zusätzliches Abwärtskraftsystem nach Anspruch 1 oder 2, wobei zwei Aktoren (40), ein Aufwärtskraftaktor (80) und ein Abwärtskraftaktor (44), zwischen jeder Reiheneinheit (16A, ..., 16P) und dem Rahmen (14) vorgesehen sind und die zusammengesetzten Kräfte, die durch die Aufwärtskraft- und die Abwärtskraftaktoren (80, 44) auf die Reiheneinheiten (16A, ..., 16P) angewendet werden, die zusätzliche Abwärtskraft ($F_D$) sind.

4. Zusätzliches Abwärtskraftsystem nach einem der Ansprüche 1 bis 3, wobei die Steuereinheit (82) bestimmt, welcher der mindestens ersten und zweiten Gruppe jede Reiheneinheit (16A, ..., 16P) jedes Mal, wenn das Werkzeug (10) angehoben und abgesenkt wird, zugeordnet wird.

5. Bodenbearbeitendes Werkzeug (10), das einen Rahmen (14) und mehrere Reiheneinheiten (16A, ..., 16P), die für eine Bewegung in Bezug auf den Rahmen beweglich an dem Rahmen (14) befestigt sind, umfasst, **dadurch ge-**

**kennzeichnet, dass** es ferner ein zusätzliches Abwärtskraftsystem nach einem der Ansprüche 1 bis 4 umfasst.

**6.** Verfahren zum Betreiben eines zusätzlichen Abwärtskraftsystem eines Bodenbearbeitungswerkzeugs (10), wobei das Werkzeug einen Rahmen (14), mehrere Reiheneinheiten (16A, ..., 16P), die beweglich an dem Rahmen (14) und dem zusätzlichen Abwärtskraftsystem, das mindestens einen Aktor (40) besitzt, der zwischen dem Rahmen (14) und jeder Reiheneinheit (16A, ..., 16P) wirkt, um eine zusätzliche Abwärtskraft auf jede Reiheneinheit (16A, ..., 16P) anzuwenden, befestigt sind, und einen Lastsensor (46A, ..., 46P) auf jeder Reiheneinheit (16A, ..., 16P), um eine Bodengegenkraftvorgang auf jede Reiheneinheit (16A, ..., 16P) zu messen, besitzt, wobei das Verfahren **dadurch gekennzeichnet ist, dass** es die folgenden Schritte umfasst: Bestimmen der Bodengegenkraft, die auf jede Reiheneinheit (16A, ..., 16P) wirkt; Vergleichen der Bodengegenkraft, die auf jede Reiheneinheit (16A, ..., 16P) wirkt, mit einer gewünschten Bodengegenkraft, die auf jede Reiheneinheit (16A, ..., 16P) wirkt; Einteilen der Reiheneinheiten (16A, ..., 16P) in mindestens eine erste Gruppe und eine zweite Gruppe der Reiheneinheiten (16A, ..., 16P); Bestimmen einer ersten zusätzlichen Abwärtskraft ($F_D$), die auf die erste Gruppe der Reiheneinheiten (16A, ..., 16P) angewendet wird, um die Bodengegenkraft ($F_R$), die auf die Reiheneinheiten (16A, ..., 16P) der ersten Gruppe wirkt, näher an die gewünschte Bodengegenkraft ($F_R$) zu bringen, und Bestimmen einer zweiten zusätzlichen Abwärtskraft ($F_D$), die auf die zweite Gruppe der Reiheneinheiten (16A, ..., 16P) angewendet wird, um die Bodengegenkraft ($F_R$), die auf die Reiheneinheiten (16A, ..., 16P) der zweiten Gruppe wirkt, näher an die gewünschte Bodengegenkraft ($F_R$) zu bringen, und Anwenden der ersten zusätzlichen Abwärtskraft ($F_D$) auf die Reiheneinheiten (16A, ..., 16P) der ersten Gruppe der Reiheneinheiten (16A, ..., 16P) und Anwenden der zweiten zusätzlichen Abwärtskraft ($F_D$) auf die Reiheneinheiten (16A, ..., 16P) der zweiten Gruppe.

**7.** Verfahren nach Anspruch 6, das ferner den Schritt des regelmäßigen wiederholten Durchführens der Schritte während des Betriebs des Werkzeugs (10) umfasst.

**8.** Verfahren nach Anspruch 6, wobei die Schritte des Verfahrens jedes Mal, wenn das Werkzeug (10) angehoben und abgesenkt wird, wiederholt werden.

**Revendications**

**1.** Système d'application de force descendante supplémentaire destiné à un engin de travail du sol (10), comprenant un châssis (14) et une pluralité d'éléments-rangs (16A, ..., 16P) montés mobiles sur le châssis (14) pour effectuer un mouvement par rapport au châssis (14), le système d'application de force descendante supplémentaire comprenant : au moins un actionneur (40) agissant entre le châssis (14) et chaque élément-rang (16A, ..., 16P) pour appliquer une force descendante supplémentaire ($F_D$) sur chaque élément-rang (16A, ..., 16P), un système de commande (64) servant à commander les actionneurs (40) comportant un contrôleur (82) et un capteur de charge (46A, ..., 46P) sur chaque élément-rang (16A, ..., 16P) pour mesurer l'action d'une force de réaction du sol sur chaque élément-rang (16A, ..., 16P), le contrôleur (82) étant adapté à recevoir une entrée en provenance de chaque capteur de charge (46A, ..., 46P), le système d'application de force descendante supplémentaire étant **caractérisé en ce que** le contrôleur est adapté à regrouper la pluralité d'éléments-rangs (16A, ..., 16P) en au moins un premier groupe d'éléments-rangs (16A, ..., 16P) et un deuxième groupe d'éléments-rangs (16A, ..., 16P) et à déterminer une première force descendante supplémentaire ($F_D$) à appliquer sur chaque élément-rang (16A, ..., 16P) dans le premier groupe d'éléments-rangs (16A, ..., 16P) et une deuxième force descendante supplémentaire ($F_D$) à appliquer sur chaque élément-rang (16A, ..., 16P) dans le deuxième groupe d'éléments-rangs (16A, ..., 16P), et des moyens pour faire fonctionner les actionneurs (40) pour appliquer les première et deuxième forces descendantes supplémentaires ($F_D$) sur les premier et deuxième groupes d'éléments-rangs (16A, ..., 16P), le contrôleur (82) étant en outre adapté à déterminer périodiquement auquel desdits au moins premier et deuxième groupes chaque élément-rang (16A, ..., 16P) est affecté.

**2.** Système d'application de force descendante supplémentaire selon la revendication 1, dans lequel : les actionneurs (40) sont pneumatiques ; le contrôleur (82) sert à déterminer une pression d'air à appliquer à chaque actionneur (40) ; et dans lequel le système de commande (64) comporte un compresseur d'air (66) et des vannes (70, 72, 74, 76, 90, 92) reliées fonctionnellement à chaque actionneur (40) pour appliquer la pression requise pour produire la force descendante supplémentaire souhaitée ($F_D$) sur chaque élément-rang (16A, ..., 16P).

**3.** Système d'application de force descendante supplémentaire selon la revendication 1 ou 2, dans lequel deux actionneurs (40) sont disposés entre chaque élément-rang (16A, ..., 16P) et le châssis (14), à savoir un actionneur à force ascendante (80) et un actionneur à force descendante (44), et les forces combinées appliquées sur l'élément-rang (16A, ..., 16P) par les actionneurs à force ascendante et à force descendante (80, 44) forment la force descendante supplémentaire (F$_D$).

4. Système d'application de force descendante supplémentaire selon les revendications 1 à 3, dans lequel le contrôleur (82) détermine auquel desdits au moins premier et deuxième groupes chaque élément-rang (16A, ..., 16P) est affecté chaque fois que l'engin (10) est relevé et abaissé.

5. Engin de travail du sol (10), comprenant un châssis (14) et une pluralité d'éléments-rangs (16A, ..., 16P) montés mobiles sur le châssis (14) pour effectuer un mouvement par rapport au châssis, **caractérisé en ce qu'**il comprend en outre un système d'application de force descendante supplémentaire selon l'une des revendications 1 à 4.

6. Procédé pour faire fonctionner un système d'application de force descendante supplémentaire d'un engin de travail du sol (10), l'engin comprenant un châssis (14), une pluralité d'éléments-rangs (16A, ..., 16P) montés mobiles sur le châssis (14), le système d'application de force descendante supplémentaire possédant au moins un actionneur (40) agissant entre le châssis (14) et chaque élément-rang (16A, ..., 16P) pour appliquer une force descendante supplémentaire sur chaque élément-rang (16A, ..., 16P) et un capteur de charge (46A, ..., 46P) sur chaque élément-rang (16A, ..., 16P) pour mesurer une force de réaction du sol agissant sur chaque élément-rang (16A, ..., 16P), le procédé étant **caractérisé en ce qu'**il comprend les étapes consistant à : déterminer la force de réaction du sol agissant sur chaque élément-rang (16A, ..., 16P) ; comparer la force de réaction du sol agissant sur chaque élément-rang (16A, ..., 16P) à une force de réaction du sol souhaitée agissant sur chaque élément-rang (16A, ..., 16P) ; regrouper les éléments-rangs (16A, ..., 16P) en au moins des premier et deuxième groupes d'éléments-rangs (16A, ..., 16P) ; déterminer une première force descendante supplémentaire (F$_D$) à appliquer sur le premier groupe d'éléments-rangs (16A, ..., 16P) de manière à amener la force de réaction du sol (F$_R$) agissant sur les éléments-rangs (16A, ..., 16P) du premier groupe plus près de la force de réaction du sol souhaitée (F$_R$) et déterminer une deuxième force descendante supplémentaire (F$_D$) à appliquer sur le deuxième groupe d'éléments-rangs (16A, ..., 16P) de manière à amener la force de réaction du sol (F$_R$) agissant sur les éléments-rangs (16A, ..., 16P) du deuxième groupe plus près de la force de réaction du sol souhaitée (F$_R$) ; et appliquer la première force descendante supplémentaire (F$_D$) sur les éléments-rangs (16A, ..., 16P) du premier groupe d'éléments-rangs (16A, ..., 16P) et appliquer la deuxième force descendante supplémentaire (F$_D$) sur les éléments-rangs (16A, ..., 16P) du deuxième groupe.

7. Procédé selon la revendication 6, comprenant en outre l'étape consistant à accomplir une nouvelle fois périodiquement lesdites étapes au cours du fonctionnement de l'engin (10).

8. Procédé selon la revendication 6, dont les étapes sont répétées chaque fois que l'engin (10) est relevé et abaissé.

Fig. 1

FIG. 2

FIG. 3

Group II

Group I

62

| J | F | | N | | | P | | LH | E |
| | G | B | | A | O | | M | D | K | C |

Low

96

60

94

High

Reaction Force $F_R$
Pass One

FIG. 4

FIG. 5

```
              ┌─────────────┐ ─── 100
              │   Planter   │
              │    Down?    │
              └──────┬──────┘
                  Yes│  ─── 102
              ┌──────▼──────┐
          ┌──►│ Gauge Wheel │◄─────────────┐
          │   │ Load Inputs │              │
          │   └──────┬──────┘              │
          │       ┌──┴── 104               │
          │    ┌──▼──────┐    No            │
          │    │  Time   │──────────────────┘
          │    │Constant?│
          │    └────┬────┘
          │      Yes│  ─── 106
          │   ┌─────▼──────────┐  Yes  ┌──────────────┐  Yes  ┌──────────────┐
          │   │Variation in any│──────►│   Max - Min  │──────►│ Determine New│
          │   │Group > Threshold?│     │> 2 Times Threshold?│ │ Threshold and│
          │   └─────┬──────────┘       └──────┬───────┘       │    Regroup   │
          │    110─┐│ No                   No │               └──────┬───────┘
          │   ┌────▼────────┐                 │                      │
          │   │Maintain Current│◄─────────────┘               ┌──────▼───────┐
          │   │   Grouping   │                                │New Group Reset│
          │   └──────┬──────┘                                 │    Valves    │
          │          │          ┌──────────────┐             └──────────────┘
          │   ┌──────▼──────┐   │ Desired Soil │                  118
          │   │Adjust Pressure│◄─│Reaction Force│── 113
          │   │Based on Groups│◄┐└──────────────┘
          │   └──────┬──────┘ │ ┌──────────────┐
          │    112─┘  │        └─│    Other     │
          │  No ┌─────▼──────┐   │  Parameters  │── 115
          └─────│   Planter  │   └──────────────┘
                │     Up?    │
                └─────┬──────┘
                   Yes│ ─── 114
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2549371 A1
- WO 2008086283 A2